# EUROPEAN PATENT SPECIFICATION

(11) **EP 3 906 820 B1**
(45) Date of publication and mention of the grant of the patent: **03.04.2024**
(21) Application number: 21159560.8
(22) Date of filing: 26.02.2021
(51) Int. Cl.: A47J 31/06

(54) **COFFEE MAKER**
KAFFEEMASCHINE
MACHINE À CAFÉ

(30) Priority: 08.05.2020 KR 20200054947
(43) Date of publication of application: 10.11.2021
(73) Proprietor: LG Electronics Inc., Seoul 07336 (KR)
(72) Inventor: KWAG, Dongseong, 08592 Seoul (KR); YOO, Imsung, 08592 Seoul (KR)
(74) Representative: Vossius & Partner Patentanwälte Rechtsanwälte mbB

(56) References cited:
- WO-A1-2017/051968
- DE-A1- 4 122 547
- KR-A- 20090 075 650
- US-A1- 2015 075 387

## Description

### BACKGROUND OF THE DISCLOSURE

### 1. Field of the Invention

The present invention relates to a coffee maker and, more particularly, to a water supply device of the coffee maker.

### 2. Background of the Disclosure

Recently, many consumers consume coffee by directly brewing coffee at home in various manners. A coffee maker is a device for extracting liquid coffee by supplying water to ground coffee according to a drip or pour-over method among various coffee making methods. Such a coffee maker has been widely used due to a simple and compact structure thereof and a convenient operating method.

The coffee maker includes a container for receiving ground coffee and a dispenser for supplying water to the received ground coffee. However, such a dispenser is generally configured to intensively supply water only to a specific portion of the ground coffee. Therefore, ground coffee and hot water do not uniformly contact each other, thereby making it difficult to produce high-quality coffee. The coffee maker may also include a grinder that grinds whole coffee beans and supplies the ground coffee to the container. However, the dispenser, particularly, a nozzle of the dispenser, may be clogged by the supplied ground coffee and may not smoothly supply water.
US 2015/075387 A1 relates to a hand drip coffee maker which enables water and syrup to be injected in a desired shape through a structure of a plurality of link arms.

### SUMMARY OF THE DISCLOSURE

The present disclosure has been made in view of the above problems, and it is an object of the present disclosure to provide a coffee maker including a dispenser that uniformly supplies water to ground coffee.

Another object of the present disclosure is to provide a coffee maker including a dispenser configured not to be clogged by ground coffee.

To solve the above problems, the present disclosure configures a dispenser, more precisely, a nozzle of the dispenser, that substantially supplies water to move with a high degree of freedom. For movement with a high degree of freedom, various mechanical mechanisms are applied to the dispenser of the present disclosure. More specifically, the mechanical mechanisms are configured to perform linear displacement and angular displacement of the nozzle. In addition, the mechanical mechanisms of the dispenser simultaneously or individually control such linear displacement and angular displacement of the nozzle. Accordingly, the dispenser of the present disclosure may implement motion of the nozzle optimized for coffee extraction by uniformly supplying water to coffee grounds. The dispenser of the present disclosure may freely modify motion and trajectory of the nozzle when necessary by the mechanisms of providing a high degree of freedom and thus various recipes for coffee extraction may be implemented. Furthermore, the dispenser of the present disclosure may also implement motion of the nozzle that avoids supplied coffee grounds based on a high degree of freedom provided by the mechanical mechanisms. The present invention is defined by the features of independent claim 1. The dependent claims relate to embodiments of the invention.

According to an aspect of the present disclosure, provided herein is a coffee maker, including an extractor configured to receive ground coffee and water and extract coffee from the ground coffee, and a dispenser configured to uniformly supply water to the ground coffee in the extractor. The dispenser includes an arm rotatably disposed above an inlet of the extractor, including a nozzle for supplying water, a first actuator disposed on the arm and configured to linearly move the nozzle to a predetermined distance above an inlet of the extractor, and a second actuator disposed on the arm and configured to pivot the nozzle at a predetermined angle above the inlet of the extractor. The first and second actuators are configured to move the nozzle to an edge of the inlet of the extractor while the ground coffee is supplied to the extractor.

The first actuator may include a rack gear disposed on the arm and coupled to the nozzle, a pinion disposed on the arm and configured to linearly reciprocate the rack gear, and a first motor configured to rotate the pinion. The second actuator may include a second motor connected to any one end of the arm and configured to rotate the arm.

The arm may include a housing disposed on an end of the arm and configured to receive various components, and a rail extended from the housing and configured to movably support the nozzle linearly. The rack gear of the first actuator may be arranged along the rail and the pinion of the first actuator is rotatably disposed within the housing to be engaged with the rack gear.

The rack gear of the first actuator may be configured to enter the housing and is accommodated within the housing. More specifically, the rack gear of the first actuator may be configured to be deformed during linear motion and to be wound within the housing.

The housing may include a first guide configured to guide the rack gear entering the housing to the pinion, and a second guide configured to guide the rack gear to be deformed and wound within the housing. The housing may include a roller arranged adjacent to the pinion within the housing and configured to push the rack gear toward the pinion while rotating.

The first actuator may be configured to pivot at the same angle and at the same speed together with the arm by the second actuator.

The second motor of the second actuator may be connected to the housing and may be configured to pivot the rail and the nozzle around the housing.

The arm may further include a holder movably disposed on the rail and configured to hold the nozzle.

The dispenser may further include a bracket coupled to a body of the coffee maker and configured to rotatably support the arm. The dispenser may further include a restriction mechanism configured to allow the arm to rotate only in a predetermined angle range.

The first and second actuators may be configured to simultaneously pivot and linearly move the nozzle. The nozzle may be moved by any one of the first and second actuators and then may be moved by the other one of the first and second actuators.

An additional range of applicability of examples described in the present disclosure will be apparent from the detailed description given below. However, it will be appreciated by those skilled in the art that various changes and modifications may be made in the scope of the present disclosure, and it should be also appreciated that configurations of the detailed description are given merely as an example.

### BRIEF DESCRIPTION OF THE DRAWINGS

The present disclosure will become more fully understood from the detailed description given herein below and the accompanying drawings, which are given by illustration only, and thus are not limitative of the present disclosure, and wherein:
FIG. 1 is a schematic view showing an example of a coffee maker;
FIG. 2 is a perspective view showing a schematic structure of a dispenser of the coffee maker according to the present disclosure;
FIG. 3 is a perspective view showing a detailed structure of the dispenser of the coffee maker according to the present disclosure;
FIG. 4 is a side view showing the dispenser of FIG. 3;
FIG. 5 is a sectional view taken along line I-I of FIG. 2;
FIGS. 6 and 7 are plan views showing in detail an arm and a first actuator of the dispenser;
FIGS. 8 to 10 are plan views showing various motions of an arm and a nozzle the first and second actuators of the dispenser;
FIG. 11 is a schematic view showing examples of various trajectories of the nozzle of the dispenser; and
FIG. 12 is a plan view showing motions of the arm and the nozzle to avoid supplied ground coffee.

### DETAILED DESCRIPTION

Hereinafter, a coffee maker according to the present disclosure will be described in detail with reference to the accompanying drawings.

In the following description, the same or similar elements are denoted by the same reference numerals even though they are depicted in different drawings and redundant descriptions thereof will be omitted. With respect to elements used in the following description, the suffixes "module" and "unit" are used or combined with each other only in consideration of ease in the preparation of the description, and do not have or serve as different meanings. Accordingly, the suffixes "module" and "unit" may be interchanged with each other. In addition, in the following description, a detailed description for known functions and configurations incorporated herein will be omitted when it may make the subject matter disclosed in the present disclosure rather unclear. In addition, the accompanying drawings are provided only for a better understanding of the examples in the present disclosure and are not intended to limit the technical concept in the present disclosure.

It will be understood that although the terms "first," "second," etc., may be used herein to describe various components, these components should not be limited by these terms. These terms are only used to distinguish one component from another component.

It will be understood that when a component is referred to as being "connected to" or "coupled to" another component, it may be directly connected to or coupled to another component or intervening components may be present. In contrast, when a component is referred to as being "directly connected to" or "directly coupled to" another component, there are no intervening components present.

As used herein, the singular form is intended to include the plural forms as well, unless the context clearly indicates otherwise.

In the present disclosure, it will be further understood that the terms "comprises", includes," etc. specify the presence of stated features, numbers, steps, operations, elements, components, or combinations thereof, but do not preclude the presence or addition of one or more other features, numbers, steps, operations, elements, components, or combinations thereof. Further, for the same reasons, the present disclosure also covers any sub-combination excluding some features, integers, steps, operations, elements, or components from any predefined combination.

In the present disclosure, the term "whole beans" refers to not raw coffee beans harvested from coffee trees but roasted coffee beans. The roasted coffee beans may have various types according to a roasted degree. For example, dark roasted coffee that is roasted for a long time may dissolve coffee ingredients in water more easily than light roasted coffee. However, in this disclosure, the whole beans are used to refer to the roasted coffee beans to be used for coffee extraction regardless of the roasted degree.

In the present disclosure, the size of ground coffee, i.e., the size of coffee grounds, may be differently set according to whole bean types. Therefore, coffee grounds having a preset size refers to coffee grounds having a size varying with preferences and whole bean types, rather than coffee grounds having a specific size.

In the present disclosure, a coffee maker refers to a device for mixing ground coffee, i.e., coffee grounds, with water, dissolving coffee ingredients in water, and then extracting liquid coffee or coffee liquid. The coffee liquid refers to water containing coffee ingredients extracted from coffee grounds. Therefore, in the present disclosure, extracting coffee liquid means that water containing coffee ingredients extracted from coffee grounds is prepared.

Unless specified otherwise in the present disclosure, coffee generally means coffee liquid. However, coffee beans and coffee grounds (ground coffee) refer to coffee of a solid type.

Finally, examples described in the present disclosure relate to a coffee maker having a dispenser disposed above a container for receiving ground coffee, i.e., above an extractor, and configured to supply water. However, the principles and configurations of the described examples may be applied to any type of coffee maker that extracts coffee by supplying water to ground coffee.

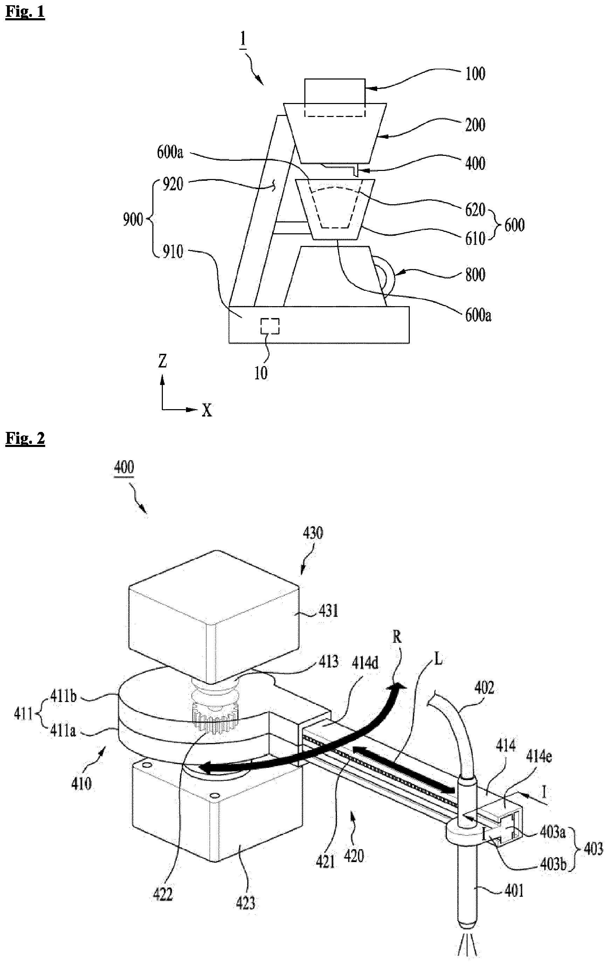

First, the overall configuration of an example of a coffee maker according to the present disclosure will be described below with reference to the related drawings. In this regard, FIG. 1 is a schematic view showing an example of a coffee maker.

Referring to FIG. 1, a coffee maker 1 may basically include an extractor 600 that receives supplied hot water and ground coffee and extracts coffee, i.e., liquid coffee, by bringing the ground coffee into contact with water. The extractor 600 may include a container 610 and a filter 620 accommodated in the container 610. In practice, the filter 620 primarily receives supplied ground coffee, i.e., coffee grounds, and water, and is configured to pass only extracted liquid coffee. The container 610 serves to stably support the filter 620. The extractor 600 may include a relatively large inlet 600a for smoothly receiving coffee grounds and water and a relatively small outlet 600b which is advantageous for inducing extracted coffee liquid. That is, the extractor 600 may generally have a funnel shape.

More specifically, the extractor 600 may extract coffee using both a cold brew method and a hot brew method based on the temperature of water used for extraction. If water of a first temperature, which is less than room temperature, is used, this may be regarded as the cold brew method and, if water of a second temperature higher than the first temperature is used, this may be regarded as the hot brew method. The extractor 600 may include a first extraction unit configured to use water of the first temperature or a second extraction unit configured to use water of the second temperature, i.e., hot water. Both the first and second extraction units may be installed in the coffee maker 1 or a user may mount a corresponding extraction unit on the coffee maker 1 according to a desired extraction method.

The coffee maker 1 may include a water supply unit, i.e., a dispenser 400, configured to supply water to the extractor 600. The dispenser 400 may be disposed above the extractor 600, more precisely, the inlet 600a of the extractor 600, in order to naturally supply water to the extractor 600 by gravity. The dispenser 400 may include a heater that heats water or may receive hot water, i.e., water of the second temperature, from an external water supply source. The dispenser 400 may supply hot water to coffee grounds in the extractor 600 using a nozzle. Alternatively, the dispenser 400 may directly supply water of room temperature, i.e., water of the first temperature, to the extractor 600 without any heating.

The coffee maker 1 may include a grinder 200 that grinds whole beans to make ground coffee of a predetermined size or less, i.e., coffee grounds. Since a grinding degree may be different and an extracted degree may also be different according to coffee types, the grinding degree may be differently set in the grinder 200 according to user selection or coffee types. The grinder 200 may also be disposed above the extractor 600 to naturally supply ground coffee to the extractor 600 by gravity. Further, since the grinder 200 has a relatively large size, when the dispenser 400 is disposed above the grinder 200, supply of water may be hindered by the grinder 200. Accordingly, the grinder 200 is disposed above the dispenser 400 and thus the dispenser 400 may be disposed between the grinder 200 and the extractor 600. By this arrangement, the grinder 200 first supplies ground coffee or coffee grounds to the extractor 600 through the inlet 600a of the extractor 600 opened toward the grinder 200 and then the dispenser 400 may supply water to the previously supplied coffee grounds in the extractor 600 for coffee extraction.

In addition, the coffee maker 1 may optionally include a whole bean supplier 100 for supplying whole coffee beans to the grinder 200. The whole bean supplier 100 may be configured to store a sufficient amount of whole beans and supply a predetermined amount of whole beans to the grinder 200 whenever necessary. Alternatively, whole beans may be provided as a disposable whole bean storage capsule (not shown) that stores only whole beans to be consumed once. If the whole bean storage capsule is disposed in the whole bean supplier 100, the whole bean storage capsule is automatically opened so that whole beans therein may be discharged to the grinder 200. An identification device (not shown) containing information about the type of whole beans etc. may be attached to the whole bean storage capsule. The identification device may contain information about the type of whole beans, a roasting degree, and a roasting date. After recognizing the information related to whole beans, the grinder 200 may adjust the grinding degree and the extractor 600 may adjust an extraction time.

The coffee maker 1 may include a server 800 disposed below the extractor 600. The server 800 may be configured to receive and store coffee liquid discharged through the extractor 600, more precisely, the outlet 600b of the extractor 600. When necessary, the server 800 may be detachably installed in the coffee maker 1 so that the stored coffee may be moved to another place.

The coffee maker 1 may include a body 900 configured to accommodate and support the above-described internal devices 100, 200, 400, 600, and 800. As shown, the body 900 may include a base 910 that rests on the floor and a supporter 920 that is extended upward from the base 910. For example, as shown in FIG. 1, the supplier 100, the grinder 200, the dispenser 400, and the extractor 600 may be mounted directly to the supporter 920 or using other accessories and may be supported by the supporter 920. As mentioned above, the server 800 may be detachably disposed on the base 910 and may be separated from the coffee maker 1 in order to move the stored coffee to another container.

The coffee maker 1 may include a control device 10. The control device 10 may be disposed, for example, in the base 910. The control device 10 may be configured to control all operations of the coffee maker 1 and the devices 100, 200, 400, 600, and 800 of the coffee maker 1. As an example, the control device 10 may include a substrate, and a processor and related electronic components mounted on the substrate and may be electrically connected to the devices 100, 200, 400, 600, 800 of the coffee maker 1. Therefore, the control device 10 may substantially control these elements for an intended operation.

The control device 10, i.e., the processor, may be referred to by various names such as a controller and a controlling unit and, in particular, may control all elements of the dispenser 400 in order to perform operation of the dispenser 400 to be described later. Accordingly, the control device 10 substantially controls all operations described below and motions performed by the operations in the present disclosure. Thereby, all features related to the control operations described below may be all features of the control device 10. For this reason, although not described as being performed by the control device 10, detailed features of all operations and motions described herein may be understood as features of the control device 10. Alternatively, operations of individual elements performed by the control device 10 may also be regarded as unique features of the corresponding elements.

In this coffee maker 1, the dispenser 400, more precisely, the nozzle of the dispenser 400 that actually supplies water, is generally fixed so as not to move and is configured to supply water only to a specific point of coffee grounds in the extractor 600. In addition, even if the nozzle of the dispenser 400 is configured to be movable, movement of the nozzle is limited in most cases. For this reason, in order to uniformly supply water to coffee grounds in the extractor 600, the coffee maker 1 of the present disclosure may include the dispenser 400 configured to freely move the nozzle to desired points. A detailed description of this dispenser 400 will be given in detail below with reference to the related drawings.

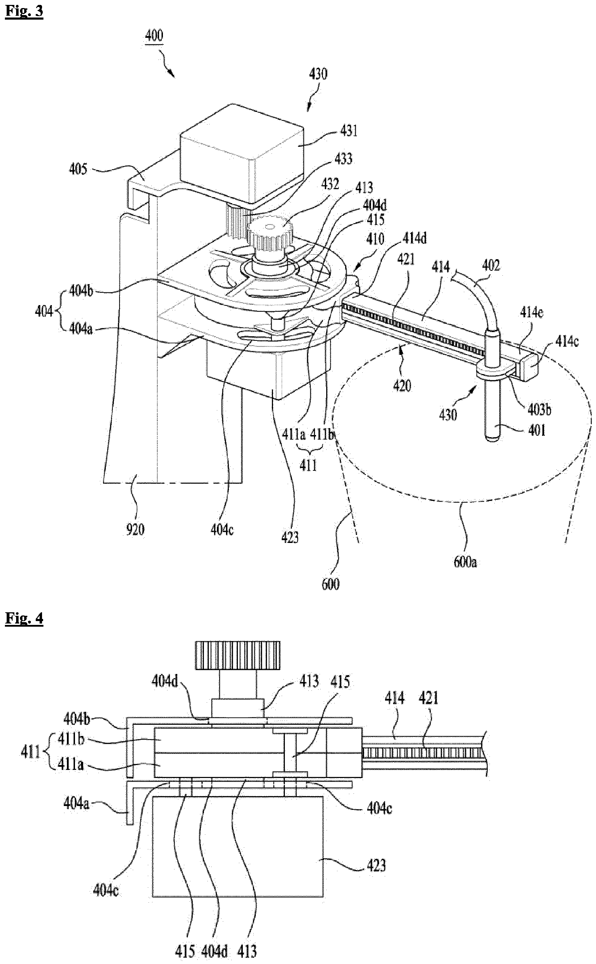

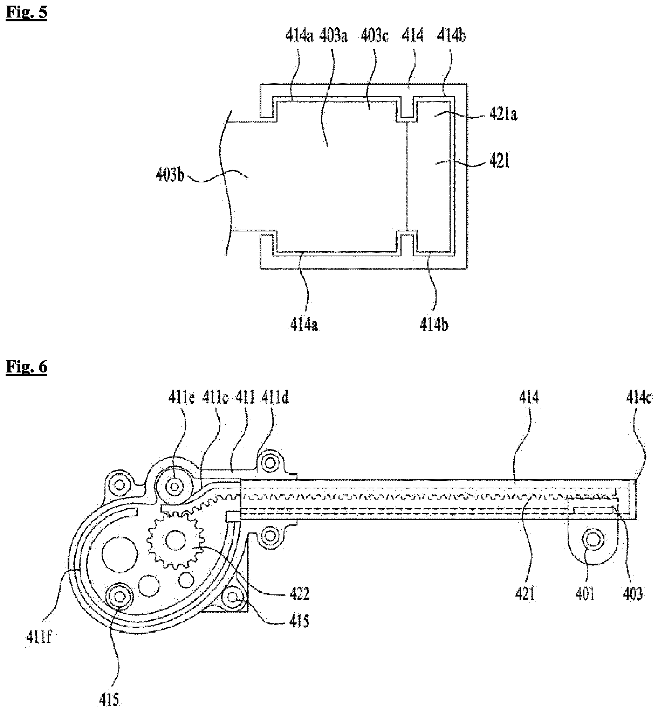

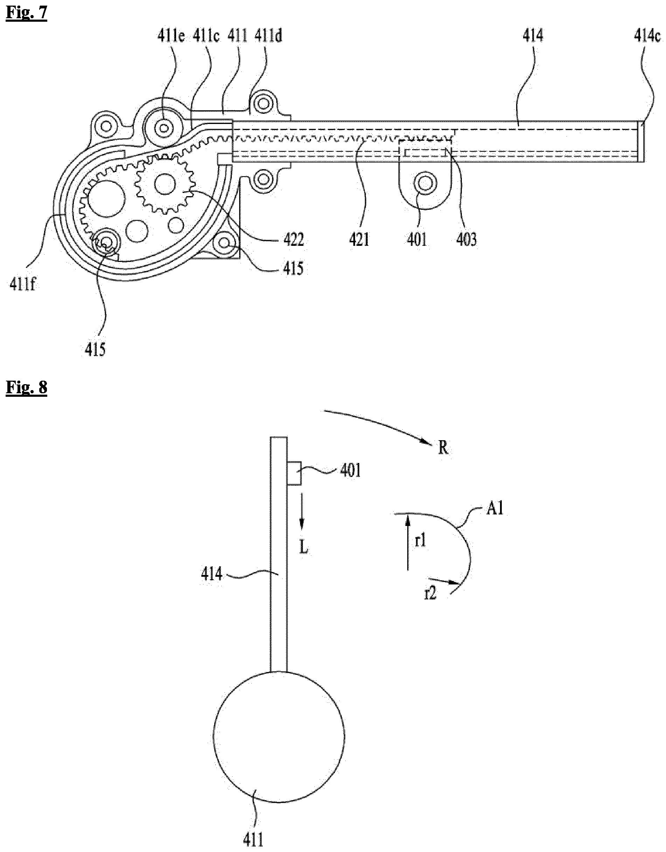

FIG. 2 is a perspective view showing a schematic structure of a dispenser of the coffee maker according to the present disclosure. FIG. 3 is a perspective view showing a detailed structure of the dispenser of the coffee maker according to the present disclosure. FIG. 4 is a side view showing the dispenser of FIG. 3. FIG. 5 is a sectional view taken along line I-I of FIG. 2. FIGS. 6 and 7 are plan views showing an arm and a first actuator of the dispenser. More specifically, FIGS. 6 and 7 show the arm from which an upper housing is eliminated in order to well show the interior of a housing. FIG. 6 shows a state of the first actuator when a nozzle is arranged far from the housing of the arm and FIG. 7 shows a state of the first actuator when the nozzle is moved close to the housing of the arm.

Referring to FIGS. 2 and 3, the dispenser 400 may include an arm 410 that is movably, more precisely, rotatably, disposed above the inlet 600a of the extractor 600. The arm 410 includes a nozzle 401 for supplying water, and a tube 402 connected to a water supply source is connected to the nozzle 401. As shown, the nozzle 401 is oriented downward. Thereby, water supplied through the tube 402 is sprayed from the nozzle 401 onto ground coffee, i.e., coffee grounds, in the extractor 600 below the nozzle 401 by gravity. As will be described in detail later, the arm 410 may hold the nozzle 401 so as not to be detached therefrom and movably support the nozzle 401.

More specifically, the arm 410 may include a housing 411 disposed at an end portion of the arm 410 and configured to receive various components. The housing 411 may include a lower housing (i.e., a first housing) 411a, and an upper housing (i.e., a second housing) 411b coupled to the lower housing 411a. The lower and upper housings 411a and 411b may form a space for receiving the components therein. The housing 411 may include only one member instead of the two separate members 411a and 411b. As will be described later, the arm 410 may be configured to pivot around the housing 411 and be disposed outside the extractor 600, more precisely, outside the inlet 600a of the extractor 600, so as not to block the inlet 600a of the extractor 600 or not to interfere with components of the extractor 600.

The arm 410 may include a rail 414 extended from the housing 411. The rail 414 may be extended above the inlet 600a of the extractor 600 to substantially cross the inlet 600a in a straight line. That is, the rail 414 may include a first end 414d connected to the housing 414 and a second end 414e opposite to the first end 414d. The rail 414 may be configured to movably support the nozzle 401 linearly. The rail 414 may be formed of a channel member including a groove extended in a straight line, and the nozzle 401 may linearly reciprocate along the formed groove of the rail 414. Further, the rail 414 may have an open side portion so that the vertically oriented nozzle 401 may be easily inserted or coupled. In order for the nozzle 401 to linearly move throughout the inlet 600a, the rail 414 may have a distance between two opposite points of the edge of the inlet 600a, e.g., a length corresponding to the diameter of the inlet 600a.

More specifically, the arm 410 may be movably arranged on the rail 414 and include a holder 403 configured to hold the nozzle 401. The holder 403 may include a base 403a disposed within the rail 414 and configured to move along the rail 414. In addition, the holder 403 may include a flange 403b that is horizontally extended from the base 403a to the outside of the rail 414 and includes a through hole into which the nozzle 401 is inserted. As is well shown in FIG. 5, the rail 414 may include a recess 414a extended to elongate in a length direction of the rail 414, and the base 403a may include a projection 403c extended from the base 403a and inserted into the recess 414a. Accordingly, the holder 403 and the nozzle 401 coupled thereto may linearly move along the rail in a stable manner by the recess 414a and the projection 403c. The rail 414 may also include a stopper 414c disposed at the second end 414e of the rail 414 and closing the rail 414. The holder 403 and the nozzle 401 may not be separated from the rail 414 by the stopper 414c during linear reciprocating motion.

Referring to FIGS. 3 and 4, in order for the arm 410 to smoothly pivot, the dispenser 400 may include a bracket 404 coupled to the body of the coffee maker 1, more precisely, the supporter 920 (see FIGS. 1 and 3), and configured to rotatably support the arm 410. As described earlier, since the arm 410 is configured to pivot around the housing 411 outside the inlet 600a, the bracket 404 may be disposed outside the inlet 600a to support the housing 411. More specifically, the bracket 404 may include a first bracket 404a disposed below the arm 410 (i.e., the housing 411) and a second bracket 404b disposed above the arm 410. The first and second brackets 404a and 404b may be formed of horizontally extended plate-shaped members and may support the arm 410, more precisely a lower surface face and an upper face of the housing 411, respectively. That is, the housing 411 is interposed between the first and second brackets 404a and 404b and is stably supported to pivot by the first and second brackets 404a and 404b. As is well shown in FIGS. 3 and 4, each of the first and second brackets 404a and 404b may include a through hole 404d. The housing 411 may include bosses 413 extended from the first and second housings 411a and 411b of the housing 411, more precisely, from lower faces and upper faces of the first and second housings 411a and 411b, and inserted into the through hole 404d. Therefore, the arm 410 may be coupled, by the through hole 404d and the bosses 413, to the bracket 404 so as not to be separated. Actually, the arm 414 may pivot around the bosses 413 above the inlet 600a relative to the bracket 404 at a predetermined angle.

Referring to FIGS. 2 to 4, 6, and 7, the dispenser 400 may include a first actuator 420 disposed on the arm 410 and configured to linearly move the nozzle 401 to a predetermined distance above the inlet 600a of the extractor 600. That is, the first actuator 420 may enable the nozzle 401 to perform linear motion or linear displacement in a direction of an arrow L, which is a length direction of the rail 414.

The first actuator 420 may include a rack gear 421 disposed on the arm 410 and coupled to the nozzle 401. The rack gear 421 may be extended to elongate along the rail 414 of the arm 410 and be movably disposed along an inner space of the rail 414. As is well shown in FIG. 5, the rail 414 may include a recess 414b extended to elongate in a length direction of the rail 414, and the rack gear 421 may include a projection 421a extended from the rack gear 421 and inserted into the recess 414b. Accordingly, by the recess 414b and the projection 421a, the rack gear 421 may stably perform linear motion together with the nozzle 401 coupled to the rack gear 421 along the rail 414. The rack gear 421 may not protrude to the outside of the rail 414 by the stopper 414c and may not interfere with other components around the rack gear 421. As illustrated in FIG. 5, the rack gear 421 may be coupled to the holder 403 so as to be coupled to the nozzle 401. More specifically, the rack gear 421 may be coupled to the base 403a of the holder 402.

The first actuator 420 may also include a pinion 422 disposed on the arm 410 together with the rack gear 421 and configured to linearly reciprocate the rack gear 421. The pinion 422 may be rotatably disposed within the housing 411, as is well shown in FIGS. 6 and 7, and be engaged with the rack gear 421. The rack gear 421 may be partially always disposed within the housing 411 so as to be always engaged with the pinion 422. In addition, the first actuator 420 may include a first motor 423 configured to rotate the pinion 422. Instead of an inner space of the housing 411 having a limited space, the first motor 423 may be disposed outside the arm 411, more precisely, below the housing 411, and a drive shaft of the first motor 423 may be coupled to the pinion 422 by penetrating the housing 411. Alternatively, the first motor 423 may be disposed above the housing 411, unlike the illustrated example. Therefore, when the pinion 422 rotates by driving of the first motor 423, the rack gear 421 engaged with the pinion 422 may perform linear motion within the rail 414. Thereby, the nozzle 401 coupled to the rack gear 421 may also linearly move along the rail 414 together with the holder 403.

In addition, if the first motor 423 is fixed to a component of the coffee maker 1, e.g., the supporter 920 or the bracket 404, rather than the arm 410, the pinion 422 coupled to the first motor 423 may relatively rotate in a direction opposite to a pivoting direction of the arm 410 while the arm 410 pivots. Accordingly, the rack gear 421 may be unintentionally moved by this relative rotation and, accordingly, movement of the nozzle 401 may not be accurately controlled. For this reason, the first motor 423 may be directly coupled only to the arm 410, more precisely, the housing 411 of the arm 410, instead of being fixed to other components around the motor 423, i.e., the supporter 920 or the bracket 404. More specifically, the arm 410 or the housing 411 may include a plurality of connecting rods 415 formed on the housing 411 and vertically extended toward the first motor 423 as shown in FIGS. 3 and 4. The first motor 423 may be coupled to the connecting rods 415 so as to be directly fixed to the arm 410 (or the housing 411). The connecting rods 415 may be formed to avoid the bracket 404 interposed between the first motor 423 and the housing 411. For a simpler structure, the connecting rods 415 may be extended by penetrating the backet 404. Accordingly, the first motor 423 may pivot at the same angle and speed as a pivoting angle and speed of the arm 411 while the arm 410 pivots. For this reason, since the pinion 423 coupled to the first motor 423 also rotates at the same angle and speed as the pivoting angle and speed of the arm 411, relative rotation is not generated and the rack gear 421 may not move while the arm 410 pivots.

Referring to FIGS. 6 and 7, the rack gear 421 needs to be formed to be considerably long for linear motion of the nozzle 401 throughout the inlet 600a of the extractor 600 as described above. Therefore, the rack gear 421 extended to be long has a considerably long administrative distance during linear reciprocating motion. For example, the rack gear 421 may have an administrative distance corresponding to twice the length thereof. If the rack gear 421 is made of a material of high rigidity and is not deformed, the rack gear 421 should be moved beyond the arm 410, more precisely, the housing 411, in order to secure a required administrative distance. However, in this case, the rack gear 421 protruding or drawn out of the arm 410 may interfere with other components of the coffee maker 1 and thus may not properly operate. For this reason, the rack gear 421 may be primarily formed of a flexible rack gear made of an elastic material. Since the flexible rack gear 421 may be elastically deformed and restored, even when the rack gear 421 is drawn out of the arm 410 and contacts components around the arm 410, the rack gear 421 may be appropriately deformed and enable movement thereof and movement of the nozzle 401 coupled to the rack gear 421. Nevertheless, this modified rack gear 421 is still likely to interfere with the components around the arm 410. Accordingly, while the entire rack gear 421 linearly moves, the rack gear 421 may be configured to always move into the housing 411 and to be accommodated in the housing 411. That is, the entire rack gear 421 may be configured to be always arranged within the arm 410 without protruding or being drawn out of the arm 410 (i.e., the housing 411 and/or the rail 414) during linear reciprocating motion. For example, as shown in FIG. 7, even when the nozzle 401 and an end of the rack gear 421 coupled to the nozzle 401 are disposed at the first end 414d of the rail 414 adjacent to the housing 411, the housing 411 may accommodate the rack gear 421 so that the rack gear 421 is not drawn to the outside.

In order for the housing 411 to accommodate the rack gear 421, the rack gear 421 may be configured to be deformed and wound within the housing 411 while performing linear motion. Accordingly, the rack gear 421 may be entirely accommodated in a limited inner space of the housing 411 by being wound within the housing 411. More specifically, as shown in FIGS. 6 and 7, for smooth accommodation of the rack gear 421, the housing 411 may include a first guide 411c disposed within the housing 411 and configured to guide the rack gear 412, i.e., a part of the rack gear 412, entering the housing 411 to the pinion 422. The first guide 411c may be disposed adjacent to an inlet 411d of the housing 411 to which the rail 414 (more precisely, the first end 414d of the rail 414) is coupled. The first guide 411c may include a rib oriented to be substantially inclined toward the pinion 422. Accordingly, the rack gear 421 entering the housing 411 may be guided by the first guide 411c and smoothly engaged with the pinion 422. The housing 411 may also include a second guide 411f disposed within the housing 411 and configured to guide the rack gear 421 to be wound within the housing 411. The second guide 411f may be extended to elongate along an inner surface of the housing 411 adjacent to the pinion 422 and guide the rack gear 421 passing through the pinion 422 to be deformed. The second guide 411f may be formed of a curved rib to have a predetermined curvature. The rack gear 421 may be wound within the housing 411 while being deformed according to the shape of the second guide 411f. Further, the housing 411 may include a roller 411e that is rotatably installed within the housing 411 and is disposed adjacent to the pinion 422. The roller 411e may be disposed adjacent even to the first guide 411c. Therefore, while rotating, the roller 411e may be basically configured to enter the housing 411 and push the rack gear 421 guided by the first guide 411c toward the pinion 422. Thereby, the rack gear 421 may be more certainly engaged with the pinion 422. The roller 411e may be configured to feed the rack gear 421 together with the pinion 422 to the second guide 411f while rotating, thereby inducing smooth deformation of the rack gear 421.

Referring back to FIGS. 2 to 4, 6, and 7, the dispenser 400 may include a second actuator 430 disposed on the arm 410 and configured to pivot the nozzle 401 above the inlet 600a of the extractor 600 at a predetermined angle. That is, the second actuator 430 may enable the nozzle 401 to perform angular motion or angular displacement in a direction of an arrow R.

The second actuator 430 may be connected to any one end of the arm 410 and configured to pivot the arm 410 around the end. That is, the second actuator 430 may be couped to the housing 411 disposed at the end of the arm 410 and configured to rotate the rail 414 and the nozzle 401 around the housing 411. As described earlier, since the housing 411 is disposed outside the inlet 600a of the extractor 600, the second actuator 430 substantially rotates the arm 410 around a predetermined point outside the inlet 600a of the extractor 600. Since the first motor 423 of the first actuator 420 is directly coupled only to the housing 411 as described above, the second actuator 430 may substantially rotate all components of the first actuator 420 including the first motor 423 and the pinion 422 at the same angle and speed together with the arm 410, thereby preventing the pinion 422 from performing unnecessary relative rotation.

To enable the arm 410 to pivot, the second actuator 430 may include a second motor 431 drivably connected to the end of the arm 410, i.e., the housing 411. A drive shaft of the second motor 431 may be coupled to the arm 410 or the housing 411 (more precisely the boss 413 of the arm 410 or the housing 411) as shown in FIG. 2. The second motor 431 may be connected to the housing 411 using a gear train. For example, as shown in FIG. 3, the second actuator 430 may include a gear train including first and second gears 432 and 433 engaged with each other. The first gear 432 may be coupled to the arm 410 or the housing 411, and the second gear 433 may be coupled to the second motor 431. Accordingly, the second actuator 430 may provide sufficient torque to the arm 410 using deceleration by the gear train. The second motor 431 may be disposed above the arm 410 or the housing 411 as shown in FIG. 3 and be coupled to the supporter 920 directly or using an auxiliary bracket 405. Alternatively, the second motor 431 may be directly coupled to the bracket 404. If the arm 410 excessively rotates by the second actuator 330, the arm 410 may interfere with the components around the coffee maker 1. Accordingly, the dispenser 400 may further include a restriction mechanism for rotatably allowing the arm 410 to rotate only within a predetermined angle range. For example, the restriction mechanism may include a slot 404c extended to the bracket 404 in a circumferential direction by a predetermined length and the connecting rod 415 disposed on the housing 411 and coupled to the first motor 423 by penetrating the slot 404c. The slot 404c may be formed to correspond to a demanded pivoting angle. For example, the length of the slot 404c may be formed to be a length that allows an angle required for the arm 410 to pivot between two opposite points of the edge of the inlet 600a of the extractor 600. Accordingly, movement of the connecting rod 415 may be limited to the length of the slot 404c and thus rotation of the housing 411, i.e., the arm 410, connected to the rod 415 may also be restricted.

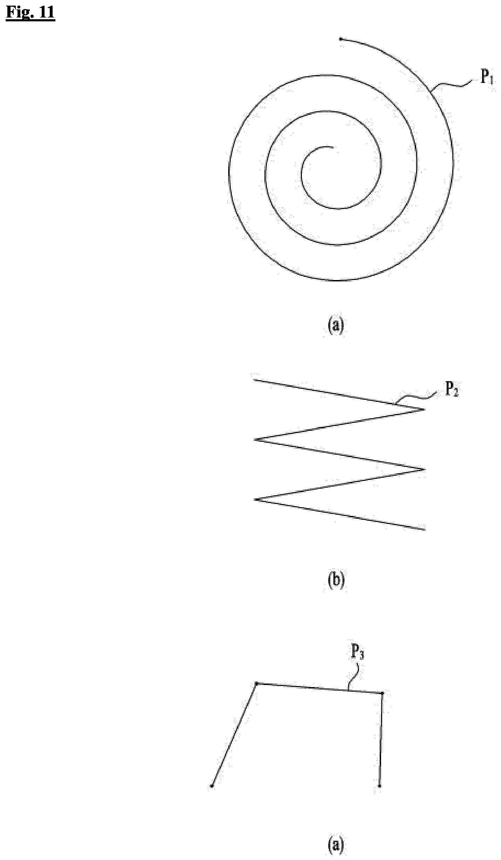

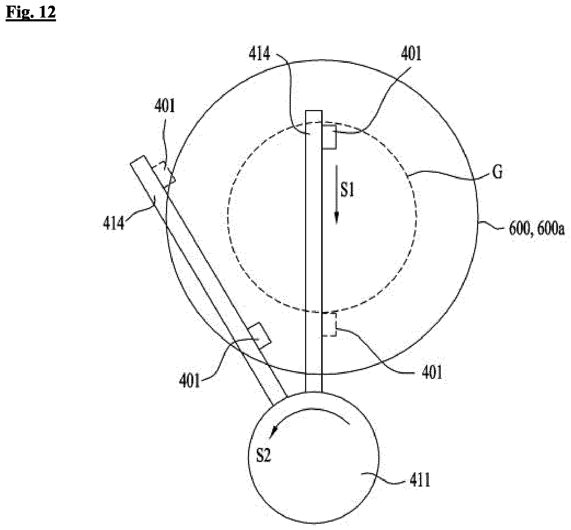

As described above, since the dispenser 400 pivots and linearly moves the nozzle 401 using the first and second actuators 420 and 430, various motions of the nozzle 401 having a high degree of freedom may be implemented. FIGS. 8 to 10 are plan views showing various motions of the arm and the nozzle by the first and second actuators of the dispenser. FIG. 11 is a schematic view showing examples of various trajectories of the nozzle of the dispenser. FIG. 12 is a plan view showing motions of the arm and the nozzle to avoid supplied ground coffee. With reference to these drawings, various motions of the nozzle 401 performed by the dispenser 400 and various trajectories of the nozzle 401 will now be described as follows.

First, as shown in FIG. 8, the first and second actuators 420 and 430 may be configured to linearly move the nozzle 410 while pivoting the nozzle 410 at the same time. That is, the nozzle 410 may pivot while continuously performing linear motion. Accordingly, as shown, the nozzle 401 may form motion A1 having different radii r1 and r2 that are gradually changed, i.e., having different curvatures that are gradually changed. This motion A1 may uniformly cover the entire inlet 600a of the extractor 600. Therefore, if water is continuously sprayed from the nozzle 401 during this motion A1, then ground coffee, i.e., coffee grounds, evenly contact water supplied from the nozzle 401 and coffee may be effectively and efficiently extracted.

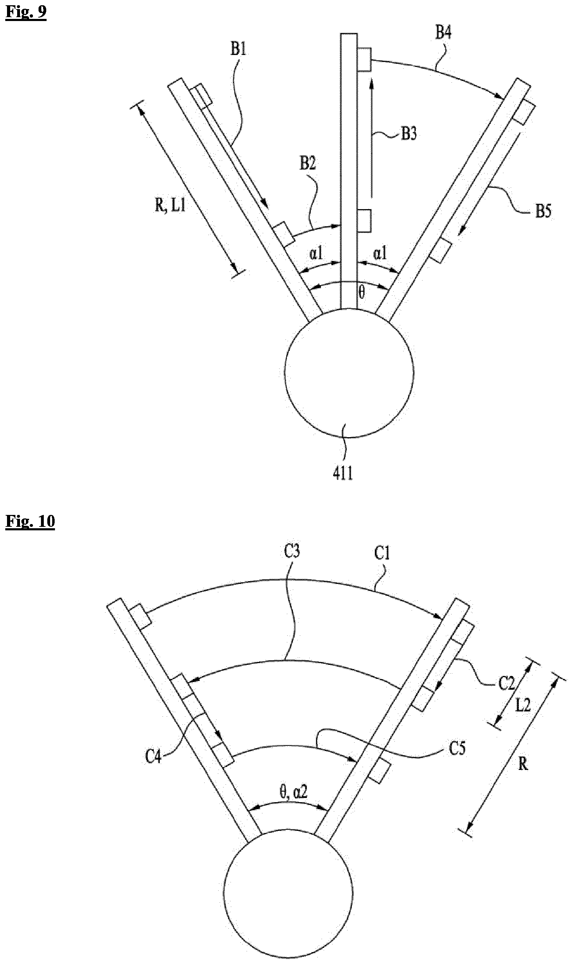

The nozzle 401 may be first moved by any one of the first and second actuators 420 and 430 and be then moved by the other one of the first and second actuators 420 and 430. That is, motions by the first and second actuators 420 and 430 may be sequentially performed. For example, referring to FIG. 9, the nozzle 401 may first be linearly moved to a predetermined distance L1 by the first actuator 420 (motion B1) and then be pivoted at a predetermined angle α1 by the second actuator 430 (motion B2). Here, the predetermined distance L1 may correspond to an administrative distance R of a maximum linear motion of the first actuator 420, whereas the predetermined angle α1 may correspond to an angle smaller than a maximum pivoting angle θ of the second actuator 430. After these motions B1 and B2, the nozzle 401 may repeat similar motions B3, B4 and B5, as shown. In addition, referring to FIG. 10, the nozzle 401 may first be pivoted at a predetermined angle α2 by the second actuator 430 (motion C1), and then be linearly moved to a predetermined distance L2 by the first actuator 420 (motion C2). Here, the predetermined distance L2 may be smaller than the administrative distance R of the maximum linear motion of the first actuator 420, whereas the predetermined angle α2 may correspond to the maximum pivoting angle θ of the second actuator 430. After these motions C1 and C2, the nozzle 401 may repeat similar motions C3, C4, and C5, as shown. These motions B1 to B5 and C1 to C5 may uniformly cover the entire inlet 600a of the extractor 600. Therefore, when water is continuously sprayed from the nozzle 401 during these motions B1 to B5 and C1 to C5, ground coffee, i.e., coffee grounds, evenly contact water supplied from the nozzle 401 and coffee may be effectively and efficiently extracted.

By the motions according to FIGS. 8 to 10, the nozzle 401 may form various trajectories P1 to P3 as shown in FIG. 11. For example, as shown in FIG. 11(a), the nozzle 401 may form a spiral trajectory P1. Since the spiral trajectory P1 requires a radius of curvature and a curvature that are continuously changed, this trajectory P1 may be formed by the motion A1 as shown in FIG. 8. In addition, ss shown in FIG. 11(b), the nozzle 401 may form a zigzag-shaped trajectory P2. This trajectory P2 may be formed by the motions B1 to B5 and C1 to C5 as shown in FIGS. 9 and 10. These trajectories P1 and P2 substantially correspond to trajectories used when water is supplied to coffee grounds in the extractor 600 and enable efficient coffee extraction. Furthermore, as shown in FIG. 11(c)11c'?>, the nozzle 401 may form a trajectory P3 moving to an arbitrary position. This trajectory P3 may be achieved by appropriately performing operations of the first and second actuators 420 and 430 simultaneously or individually. The trajectory P3 is advantageous in constructing various recipes for coffee extraction by supplying water to portions intended by the user.

As shown in FIG. 12, when coffee grounds are supplied to the extractor 600 manually by the user or automatically by the grinder 200, the coffee grounds generally pass through a central region G of a predetermined size disposed in the inlet 600a of the extractor 600. Therefore, if the nozzle 401 is disposed in the central region G, the coffee grounds may be accumulated on the nozzle 401 and may clog the nozzle 401. Therefore, while the coffee grounds are supplied to the extractor 600, the dispenser 400, i.e., the actuators 420 and 430 of the dispenser 400, moves the nozzle 401 out of the region G. More specifically, the first actuator 420 may move the nozzle 401 to a region adjacent to the housing 410, i.e., above the edge of the inlet 600a, as indicated by an arrow S1. In addition, if the coffee grounds are stacked even on the rail 414, movement of the nozzle 410 may be disturbed. Accordingly, as indicated by an arrow S2, the second actuator 430 may pivot the rail 414 above the edge of the inlet 600a so as to leave the region G. That is, the rail 414 may be oriented along the edge of the inlet 600a and may avoid the coffee grounds. By such pivoting, not only the rail 414 but also the nozzle 401 may be disposed above the edge of the inlet 600a so as to leave the region G. By the above-described avoidance movement, the coffee grounds may be prevented from being stacked on the nozzle 401 and the rail 414, and smooth operation of the dispenser 400 may be ensured.

The effects of the coffee maker according to the present disclosure are as follows.

In the coffee maker according to the present disclosure, the dispenser may include first and second actuators each independently performing linear displace and angular displacement of the nozzle. The dispenser may implement various motions of the nozzle having a high degree of freedom using these first and second actuators. Accordingly, the nozzle may move along a trajectory uniformly passing through all of coffee grounds in the coffee maker and water sprayed from the nozzle may uniformly contact the coffee grounds. Accordingly, high-quality coffee may be efficiently and effectively extracted. Since the nozzle may also move along various trajectories according to user intention, recipes for coffee extraction desired by the user may be implemented. For this reason, the coffee maker may have improved coffee extraction capability and expanded functionality.

Furthermore, the nozzle is moved to avoid supplied coffee grounds by the first and second actuators. Therefore, the nozzle may be prevented from being clogged by the coffee grounds so that the reliability and stability of the coffee maker may be further improved.

The effects of the present disclosure are not limited to what has been mentioned hereinabove and other effects not mentioned will be apparently and clearly understood by those skilled in the art.

## Claims

1. A coffee maker (1), comprising:
an extractor (600) configured to receive ground coffee and water and extract coffee from the ground coffee; and
a dispenser (400) configured to uniformly supply water to the ground coffee in the extractor (600),
wherein the dispenser (400) includes:
an arm (410) rotatably disposed above an inlet (600a) of the extractor (600), including a nozzle (401) for supplying water;
a first actuator (420) disposed on the arm (410) and configured to linearly move the nozzle (401) to a predetermined distance above the inlet (600a) of the extractor (600); and
a second actuator (430) disposed on the arm (410) and configured to pivot the nozzle (401) at a predetermined angle above the inlet (600a) of the extractor (600),
wherein the first and second actuators (420, 430) are configured to move the nozzle (401) to an edge of the inlet (600a) of the extractor (600) while the ground coffee is supplied to the extractor (600).

2. The coffee maker of claim 1, wherein the first actuator (420) includes:
a rack gear (421) disposed on the arm (410) and coupled to the nozzle (401);
a pinion (422) disposed on the arm (410) and configured to linearly reciprocate the rack gear (421); and
a first motor (423) configured to rotate the pinion (422).

3. The coffee maker of claim 1 or 2,
wherein the second actuator (430) includes a second motor (431) connected to any one end of the arm (410) and configured to rotate the arm (410).

4. The coffee maker of claim 2 or 3, wherein the arm (410) includes:
a housing (411) disposed on an end of the arm (410) and configured to receive various components; and
a rail (414) extended from the housing (411) and configured to movably support the nozzle (401) linearly.

5. The coffee maker of claim 4,
wherein the rack gear (421) of the first actuator (420) is arranged along the rail (414) and the pinion (422) of the first actuator (420) is rotatably disposed within the housing (411) to be engaged with the rack gear (421).

6. The coffee maker of claim 5,
wherein the rack gear (421) of the first actuator (420) is configured to enter the housing (411) and is accommodated within the housing (411).

7. The coffee maker of claim 6,
wherein the rack gear (421) of the first actuator (420) is configured to be deformed during linear motion and to be wound within the housing (411).

8. The coffee maker of claim 6 or 7, wherein the housing (411) includes:
a first guide (411c) configured to guide the rack gear (421) entering the housing (411) to the pinion (422); and
a second guide (411f) configured to guide the rack gear (421) to be deformed and wound within the housing (411).

9. The coffee maker of any one of claims 6 to 8,
wherein the housing (411) includes a roller (411e) arranged adjacent to the pinion (422) within the housing (411) and configured to push the rack gear (421) toward the pinion (422) while rotating.

10. The coffee maker of any one of claims 4 to 9,
wherein the first actuator (420) is configured to pivot at the same angle and at the same speed together with the arm (410) by the second actuator (430).

11. The coffee maker of any one of claims 4 to 10,
wherein the second motor (431) of the second actuator (430) is connected to the housing (411) and is configured to pivot the rail (414) and the nozzle (401) around the housing (411).

12. The coffee maker of any one of claims 4 to 11,
wherein the arm (410) further includes a holder (403) movably disposed on the rail (414) and configured to hold the nozzle (401).

13. The coffee maker of any one of claims 4 to 12,
wherein the dispenser (400) further includes a bracket (404) coupled to a body of the coffee maker (1) and configured to rotatably support the arm (410),
wherein optionally the dispenser (400) further includes a restriction mechanism (404c) configured to allow the arm (410) to rotate only in a predetermined angle range.

14. The coffee maker of any one of claims 1 to 13,
wherein the first and second actuators (420, 430) are configured to simultaneously pivot and linearly move the nozzle (401), or
wherein the coffee maker (1) is configured to move the nozzle (401) by any one of the first and second actuators (420 or 430) and then by the other one of the first and second actuators (430 or 420).

## Patentansprüche

1. Kaffeemaschine (1), aufweisend:
einen Extraktor (600), der zum Aufnehmen von gemahlenem Kaffee und Wasser und zum Extrahieren von Kaffee aus dem gemahlenen Kaffee konfiguriert ist; und
einen Spender (400), der zum gleichmäßigen Zuführen von Wasser zu dem gemahlenen Kaffee im Extraktor (600) konfiguriert ist,
wobei der Spender (400) aufweist:
einen Arm (410), der drehbar über einem Einlass (600a) des Extraktors (600) angeordnet ist und eine Düse (401) zum Zuführen von Wasser aufweist;
einen ersten Aktuator (420), der an dem Arm (410) angeordnet und zum linearen Bewegen der Düse (401) zu einem vorbestimmten Abstand über dem Einlass (600a) des Extraktors (600) konfiguriert ist; und
einen zweiten Aktuator (430), der an dem Arm (410) angeordnet und zum Schwenken der Düse (401) in einem vorbestimmten Winkel über dem Einlass (600a) des Extraktors (600) konfiguriert ist,
wobei der erste und der zweite Aktuator (420, 430) zum Bewegen der Düse (401) zu einem Rand des Einlasses (600a) des Extraktors (600) konfiguriert sind, während der gemahlene Kaffee dem Extraktor (600) zugeführt wird.

2. Kaffeemaschine nach Anspruch 1, wobei der erste Aktuator (420) aufweist:
eine Zahnstange (421), die auf dem Arm (410) angeordnet und mit der Düse (401) gekoppelt ist;
ein Ritzel (422), das auf dem Arm (410) angeordnet und zum linearen Hin- und Herbewegen der Zahnstange (421) konfiguriert ist; und
einen ersten Motor (423), der zum Drehen des Ritzels (422) konfiguriert ist.

3. Kaffeemaschine nach Anspruch 1 oder 2,
wobei der zweite Aktuator (430) einen zweiten Motor (431) aufweist, der mit einem beliebigen Ende des Arms (410) verbunden und zum Drehen des Arms (410) konfiguriert ist.

4. Kaffeemaschine nach Anspruch 2 oder 3, wobei der Arm (410) aufweist:
ein Gehäuse (411), das an einem Ende des Arms (410) angeordnet und zum Aufnehmen verschiedener Komponenten konfiguriert ist; und
eine Schiene (414), die sich von dem Gehäuse (411) aus erstreckt und so konfiguriert ist, dass sie die Düse (401) linear beweglich lagert.

5. Kaffeemaschine nach Anspruch 4,
wobei die Zahnstange (421) des ersten Aktuators (420) entlang der Schiene (414) angeordnet ist und das Ritzel (422) des ersten Aktuators (420) so im Gehäuse (411) drehbar angeordnet ist, dass es mit der Zahnstange (421) in Eingriff steht.

6. Kaffeemaschine nach Anspruch 5,
wobei die Zahnstange (421) des ersten Aktuators (420) zum Eintreten in das Gehäuse (411) konfiguriert und in dem Gehäuse (411) untergebracht ist.

7. Kaffeemaschine nach Anspruch 6,
wobei die Zahnstange (421) des ersten Aktuators (420) so konfiguriert ist, dass sie bei der linearen Bewegung verformt und im Gehäuse (411) aufgewickelt wird.

8. Kaffeemaschine nach Anspruch 6 oder 7, wobei das Gehäuse (411) aufweist:
eine erste Führung (411c), die zum Führen der in das Gehäuse (411) eintretenden Zahnstange (421) zum Ritzel (422) konfiguriert ist; und
eine zweite Führung (411f), die so zum Führen der Zahnstange (421) konfiguriert ist, dass sie verformt und im Gehäuse (411) aufgewickelt wird.

9. Kaffeemaschine nach einem der Ansprüche 6 bis 8,
wobei das Gehäuse (411) eine Walze (411e) aufweist, die benachbart zu dem Ritzel (422) im Gehäuse (411) angeordnet und zum Schieben der Zahnstange (421) zum Ritzel (422) hin während der Drehung konfiguriert ist.

10. Kaffeemaschine nach einem der Ansprüche 4 bis 9,
wobei der erste Aktuator (420) zum Schwenken im gleichen Winkel und mit der gleichen Geschwindigkeit zusammen mit dem Arm (410) durch den zweiten Aktuator (430) konfiguriert ist.

11. Kaffeemaschine nach einem der Ansprüche 4 bis 10,
wobei der zweite Motor (431) des zweiten Aktuators (430) mit dem Gehäuse (411) verbunden und zum Schwenken der Schiene (414) und der Düse (401) um das Gehäuse (411) konfiguriert ist.

12. Kaffeemaschine nach einem der Ansprüche 4 bis 11,
wobei der Arm (410) ferner einen Halter (403) aufweist, der beweglich auf der Schiene (414) angeordnet und zum Halten der Düse (401) konfiguriert ist.

13. Kaffeemaschine nach einem der Ansprüche 4 bis 12,
wobei der Spender (400) ferner eine Halterung (404) aufweist, die mit einem Körper der Kaffeemaschine (1) gekoppelt und zum drehbaren Lagern des Arms (410) konfiguriert ist, wobei optional der Spender (400) ferner einen Begrenzungsmechanismus (404c) aufweist, der so konfiguriert ist, dass er ein Drehen des Arms (410) nur in einem vorbestimmten Winkelbereich gestattet.

14. Kaffeemaschine nach einem der Ansprüche 1 bis 13,
wobei der erste und der zweite Aktuator (420, 430) zum gleichzeitigen Schwenken und linearen Bewegen der Düse (401) konfiguriert sind, oder
wobei die Kaffeemaschine (1) so konfiguriert ist, dass die Düse (401) zuerst durch einen des ersten und zweiten Aktuators (420 oder 430) und dann durch den anderen des ersten und zweiten Aktuators (430 oder 420) bewegt wird.

## Revendications

1. Machine à café (1) comprenant :
un extracteur (600) configuré pour recevoir du café moulu et de l'eau et extraire le café du café moulu ; et
un distributeur (400) configuré pour amener uniformément l'eau au café moulu dans l'extracteur (600),
dans laquelle le distributeur (400) comprend :
un bras (410) disposé, de manière rotative, au-dessus d'une entrée (600a) de l'extracteur (600), comprenant une buse (401) pour l'alimentation en eau ;
un premier actionneur (420) disposé sur le bras (410) et configuré pour déplacer, de manière linéaire, la buse (401) sur une distance prédéterminée au-dessus de l'entrée (600a) de l'extracteur (600) ; et
un second actionneur (430) disposé sur le bras (410) et configuré pour faire pivoter la buse (401) selon un angle prédéterminé au-dessus de l'entrée (600a) de l'extracteur (600),
dans laquelle les premier et second actionneurs (420, 430) sont configurés pour déplacer la buse (401) vers un bord de l'entrée (600a) de l'extracteur (600) alors que le café moulu est amené à l'extracteur (600).

2. Machine à café selon la revendication 1, dans laquelle le premier actionneur (420) comprend :
un engrenage à crémaillère (421) disposé sur le bras (410) et couplé à la buse (401) ;
un pignon (422) disposé sur le bras (410) et configuré pour faire effectuer un mouvement de va-et-vient, de manière linéaire, à l'engrenage à crémaillère (421) ; et
un premier moteur (423) configuré pour faire tourner le pignon (422).

3. Machine à café selon la revendication 1 ou 2,
dans laquelle le second actionneur (430) comprend un second moteur (431) raccordé à l'une quelconque des extrémités du bras (410) et configuré pour faire tourner le bras (410).

4. Machine à café selon la revendication 2 ou 3, dans laquelle le bras (410) comprend :
un boîtier (411) disposé sur une extrémité du bras (410) et configuré pour recevoir différents composants ; et
un rail (414) étendu à partir du boîtier (411) et configuré pour supporter, de manière mobile, la buse (401), de manière linéaire.

5. Machine à café selon la revendication 4,
dans laquelle l'engrenage à crémaillère (421) du premier actionneur (420) est agencé le long du rail (414) et le pignon (422) du premier actionneur (420) est disposé, de manière rotative, à l'intérieur du boîtier (411) pour être mis en prise avec l'engrenage à crémaillère (421).

6. Machine à café selon la revendication 5,
dans laquelle l'engrenage à crémaillère (421) du premier actionneur (420) est configuré pour entrer dans le boîtier (411) et est logé à l'intérieur du boîtier (411).

7. Machine à café selon la revendication 6,
dans laquelle l'engrenage à crémaillère (421) du premier actionneur (420) est configuré pour être déformé pendant le mouvement linéaire et être enroulé à l'intérieur du boîtier (411).

8. Machine à café selon la revendication 6 ou 7, dans laquelle le boîtier (411) comprend :
un premier guide (411c) configuré pour guider l'engrenage à crémaillère (421) entrant dans le boîtier (411) vers le pignon (422) ; et
un second guide (411f) configuré pour guider l'engrenage à crémaillère (421) destiné à être déformé et enroulé à l'intérieur du boîtier (411).

9. Machine à café selon l'une quelconque des revendications 6 à 8,
dans laquelle le boîtier (411) comprend un rouleau (411e) agencé de manière adjacente au pignon (422) à l'intérieur du boîtier (411) et configuré pour pousser l'engrenage à crémaillère (421) vers le pignon (422) tout en tournant.

10. Machine à café selon l'une quelconque des revendications 4 à 9,
dans laquelle le premier actionneur (420) est configuré pour pivoter au même angle et à la même vitesse conjointement avec le bras (410) grâce au second actionneur (430).

11. Machine à café selon l'une quelconque des revendications 4 à 10,
dans laquelle le second moteur (431) du second actionneur (430) est raccordé au boîtier (411) et est configuré pour faire pivoter le rail (414) et la buse (401) autour du boîtier (411).

12. Machine à café selon l'une quelconque des revendications 4 à 11,
dans laquelle le bras (410) comprend en outre un support (403) disposé, de manière mobile, sur le rail (414) et configuré pour maintenir la buse (401).

13. Machine à café selon l'une quelconque des revendications 4 à 12,
dans laquelle le distributeur (400) comprend en outre une console (404) couplée à un corps de la machine à café (1) et configuré pour supporter, de manière rotative, le bras (410),
dans laquelle, facultativement, le distributeur (400) comprend en outre un mécanisme de restriction (404c) configuré pour permettre au bras (410) de tourner uniquement dans une plage d'angle prédéterminée.

14. Machine à café selon l'une quelconque des revendications 1 à 13,
dans laquelle les premier et second actionneurs (420, 430) sont configurés pour faire pivoter simultanément et déplacer, de manière linéaire, la buse (401), ou bien
dans laquelle la machine à café (1) est configurée pour déplacer la buse (401) grâce à l'un quelconque parmi les premier et second actionneurs (420 ou 430) et ensuite grâce à l'autre parmi les premier et second actionneurs (430 ou 420).
